(19) Europäisches Patentamt
European Patent Office
Office européen des brevets

(11) **EP 2 894 315 A1**

(12) **EUROPÄISCHE PATENTANMELDUNG**

(43) Veröffentlichungstag:
**15.07.2015   Patentblatt 2015/29**

(51) Int Cl.:
*F02C 3/10* *(2006.01)*        *F02C 3/113* *(2006.01)*
*F02C 6/20* *(2006.01)*        *F02C 7/36* *(2006.01)*

(21) Anmeldenummer: **14151119.6**

(22) Anmeldetag: **14.01.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Savilius, Nicolas**
  **45359 Essen (DE)**
• **Link, Marco**
  **46049 Oberhausen (DE)**

(54) **Gasturbine**

(57)     Eine zweiwellige Gasturbine (10) umfasst einen Verdichter (13), eine Hochdruckturbine (14), eine Niederdruckturbine (15), eine in dem Verdichter (13) und der Hochdruckturbine (14) angeordnete erste Welle (28) sowie eine in der Niederdruckturbine (15) angeordnete zweite Welle (29). Die Gasturbine umfasst eine Kupplung (16, 30), mit der die erste Welle (28) und die zweite Welle (29) miteinander zumindest in eine Drehrichtung drehmomentübertragend verbindbar sind.

FIG 2

EP 2 894 315 A1

**Beschreibung**

Die vorliegende Erfindung betrifft eine zweiwellige Gasturbine.

Es ist im Stand der Technik bekannt Gasturbinen, insbesondere vergleichsweise kleine Gasturbinen, zweiwellig auszuführen. Dabei verfügen ein Verdichter und eine Hochdruckturbine (Verdichterturbine) über dieselbe Welle und bilden einen sogenannten Gasgenerator. Eine Niederdruckturbine der Gasturbine (Leistungsturbine) weist eine separate Welle auf, die zur Stromerzeugung mit einem Generator verbunden ist.

Bei zweiwelligen Gasturbinen ist es im Gegensatz zu einwelligen Gasturbinen nicht möglich, den mit der Niederdruckturbine gekoppelten Generator zum Anschleppen der der Gasturbine beim Gasturbinenstart zu verwenden, da der Generator nicht mit der Welle des Verdichters verbunden ist. Daher wird bei zweiwelligen Gasturbinen ein separater Startermotor benötigt. Der zusätzliche Startermotor macht Anpassungen an einer Ansauggeometrie der Gasturbine notwendig und verteuert die Gasturbine.

Bei zweiwelligen Gasturbinen ist es im Gegensatz zu einwelligen Gasturbinen zudem nicht möglich, einen Verdichtermassenstrom über eine Eintrittsleitschaufelverstellung in einem gewissen Rahmen frei einzustellen, da sich bedingt durch das Leistungsgleichgewicht zwischen Verdichter und Hochdruckturbine der Verdichtermassenstrom und die Drehzahl des Verdichters direkt ergeben. Bei der zweiwelligen Gasturbine sinkt die Drehzahl des Gasgenerators und somit ein Verdichtereintrittsmassenstrom bei einer Leistungsreduktion zwar automatisch ab, jedoch reicht diese Abnahme nicht aus, um die Flammtemperatur vor einem raschen absinken zu bewahren, wodurch die CO-Emissionen steigen. Im Stand der Technik bekannte zweiwellige Gasturbinen weisen ein hinsichtlich der CO-Emission konforme Fahrweise lediglich in einem Bereich auf, der zwischen 80 % und 100 % der Gasturbinenleistung liegt.

Der vorliegenden Erfindung liegt die Aufgabe zugrunde, diese Nachteile zu beheben und eine verbesserte Gasturbine bereitzustellen.

Gelöst wird diese Aufgabe mit einer Gasturbine nach Anspruch 1. Weiterbildungen der Erfindung sind in den Unteransprüchen angegeben und in der Beschreibung beschrieben.

Die erfindungsgemäße Gasturbine umfasst einen Verdichter, eine Hochdruckturbine, eine Niederdruckturbine, eine in dem Verdichter und der Hochdruckturbine angeordnete erste Welle sowie eine in der Niederdruckturbine angeordnete zweite Welle. Erfindungsgemäß umfasst die Gasturbine zudem eine Kupplung. Mit der Kupplung sind die erste Welle und die zweite Welle miteinander zumindest in eine Drehrichtung drehmomentübertragend verbindbar.

Mit dieser Anordnung ist es vorteilhaft möglich, einen mit der zweiten Welle drehmomentübertragend verbundenen und an einen Anfahrumrichter angeschlossenen Generator zum Anfahren der Gasturbine oder zum Kesselspülen zu verwenden, anstelle eines zusätzlichen Starter-Motors. Dieser kann eingespart werden, wodurch sich Kostenvorteile und konstruktive Freiheiten bei der Ansauggeometrie ergeben.

In einer vorteilhaften Ausgestaltung der erfindungsgemäßen Gasturbine ist die Kupplung eine hydraulische Kupplung.

Die hydraulische Kupplung stellt hierbei eine verschleißfreie und langlebige Variante der Kupplung dar.

In einer weiteren vorteilhaften Ausgestaltung der erfindungsgemäßen Gasturbine ist die hydraulische Kupplung regelbar. Durch die Regelbarkeit der Drehmomentübertragungsrate kann die Gasturbine in einem größeren Bereich CO-konform betrieben werden, da im Teillastbereich eine hohe Flammentemperatur eingestellt werden kann.

In einer weiteren vorteilhaften Ausgestaltung der erfindungsgemäßen Gasturbine umfasst die hydraulische Kupplung einen mit der ersten Welle drehmomentübertragend verbundenen ersten Kupplungsrotor und einen mit der zweiten Welle drehmomentübertragend verbundenen zweiten Kupplungsrotor. Die Kupplungsrotoren sind mit Schaufelelementen versehen, die ausgebildet sind, eine in der Kupplung befindliche Kupplungsflüssigkeit in der Weise zu beeinflussen, dass zwischen dem ersten Kupplungsrotor und dem zweiten Kupplungsrotor ein Kraftschluss durch Flüssigkeitsreibung erzeugbar ist.

Mit dieser Ausgestaltung der hydraulischen Kupplung kann durch einfache Mittel eine verschleißfreie Flüssigkeitsreibung erzielt werden.

In einer weiteren vorteilhaften Ausgestaltung der erfindungsgemäßen Gasturbine ist ein Füllstand der Kupplungsflüssigkeit variabel einstellbar.

Durch die Veränderbarkeit des Füllstands, lässt sich die Drehmomentübertragungsrate beeinflussen.

In einer weiteren vorteilhaften Ausgestaltung der erfindungsgemäßen Gasturbine umfasst die Gasturbine eine mit der hydraulischen Kupplung fluidleitend verbundene Füllstandeinstelleinheit mit zumindest einem Reservoir zur Aufbewahrung der Kupplungsflüssigkeit und zumindest einer Pumpe zur Beförderung der Kupplungsflüssigkeit aus der hydraulischen Kupplung ins Reservoir und/oder aus dem Reservoir in die hydraulische Kupplung.

Damit kann der Füllstand der Kupplungsflüssigkeit in der Kupplung auf eine einfache Weise verändert werden.

In einer weiteren vorteilhaften Ausgestaltung der erfindungsgemäßen Gasturbine umfasst die Füllstandeinstelleinheit ein Kühlsystem, welches ausgebildet ist, der Kupplungsflüssigkeit Wärme zu entziehen.

Damit kann die Temperatur der Kupplung unter einem bestimmten Wert gehalten und die Funktionsfähigkeit auch bei hoher Beanspruchung sichergestellt werden.

In einer alternativen Ausgestaltung der erfindungsgemäßen Gasturbine ist die Kupplung eine Überholkupplung. Die Überholkupplung ist insbesondere in der Weise angeordnet, dass die erste Welle schneller als die zweite Welle drehbar ist und die zweite Welle nicht schneller als die erste Welle drehbar ist.

Mit dieser Variante der Kupplung kann auf eine Regelung beziehungsweise Steuerung der Kupplung verzichtet werden.

Ausführungsbeispiele der Erfindung werden anhand der Zeichnungen und der nachfolgenden Beschreibung näher erläutert. Es zeigen:

Figur 1    eine Gasturbine nach dem Stand der Technik;

Figur 2    eine erfindungsgemäße Gasturbine in einer ersten Ausgestaltung; und

Figur 3    die erfindungsgemäße Gasturbine in einer weiteren Ausgestaltung.

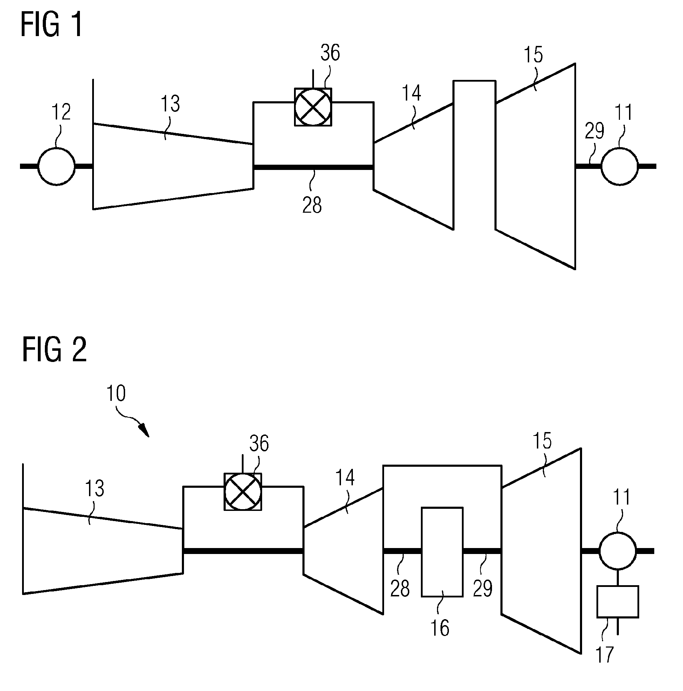

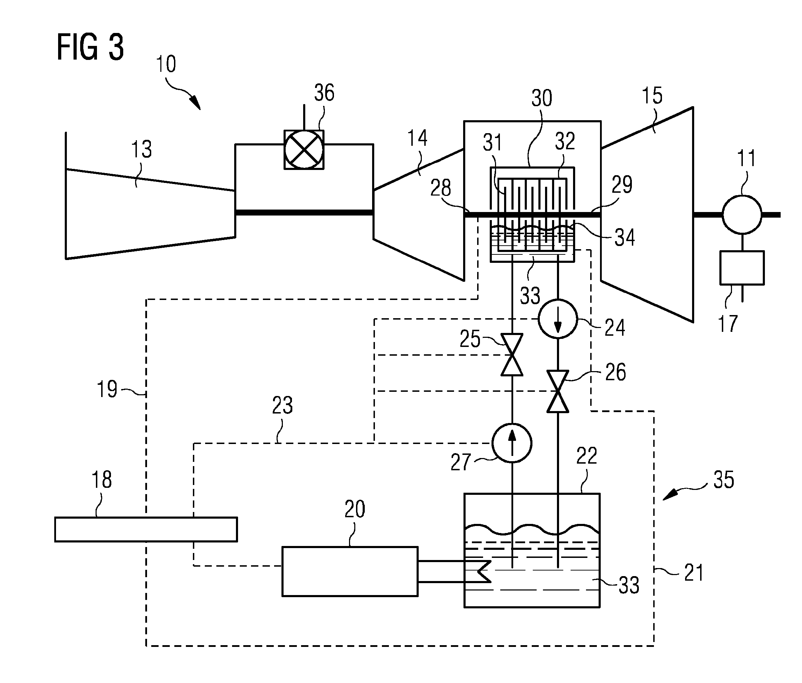

In der Figur 1 ist eine zweiwellige Gasturbine nach dem Stand der Technik dargestellt und in der Figur 2 ist eine erfindungsgemäße Gasturbine 10 in einer ersten beispielhaften Ausgestaltung dargestellt. In der Figur 3 ist eine erfindungsgemäße Gasturbine 10 in einer zweiten beispielhaften Ausgestaltung dargestellt.

Wie im Stand der Technik verfügt die Gasturbine 10 über einen Verdichter 13, eine Hochdruckturbine 14 und eine Niederdruckturbine 15. Zwischen dem Verdichter 13 und der Hochdruckturbine 14 ist eine Brennkammer 36 angeordnet. Eine erste Welle 28 verläuft durch den Verdichter 13 sowie die Hochdruckturbine 14 und eine zweite Welle 29 verläuft durch die Hochdruckturbine. Die Einheit aus Verdichter 13 und Hochdruckturbine 14 bildet einen sogenannten Gasgenerator. Die zweite Welle 29 kann zur Stromerzeugung mit einem Generator 11 drehmomentübertragend verbunden sein.

Die erfindungsgemäße Gasturbine 10 weist zusätzlich eine Kupplung 16, 30 auf. Die Kupplung 16, 30 ist mit der ersten Welle 28 und mit der zweiten Welle 29 in der Weise verbunden, dass zumindest in eine Drehrichtung ein Drehmoment übertragbar ist. Die Kupplung ist insbesondere eine Überholkupplung 16. In dieser Ausgestaltung ist es in der Figur 2 gezeigt. Alternativ ist die Kupplung 30 eine hydraulische Kupplung 30. So ist es in der Figur 3 dargestellt.

Mit der Möglichkeit die erste Welle 28 und die zweite Welle 29 drehmomentübertragend zu verbinden, braucht die erfindungsgemäße Gasturbine keinen Starter-Motor 12 aufweisen. Ist die zweite Welle 29 mit dem Generator 11 drehmomentübertragend verbunden und der Generator 11 mit einem Anfahrumrichter verschaltet, kann der Generator 11 zum Anfahren der Gasturbine 10 verwendet werden.

Die Überholkupplung 16 ist insbesondere eine "Synchro-Self-Shifting" Kupplung. Die Überholkupplung 16 ist insbesondere in der Weise angeordnet, dass die erste Welle 28 schneller als die zweite Welle 29 drehen kann aber zugleich verhindert ist, dass die zweite Welle 29 schneller als die erste Welle 28 dreht. Dadurch kann die Hochdruckturbine 14 nicht von der Niederdruckturbine 15 überholt werden.

Zum Start der Gasturbine 10 oder zum Kesselspülen kann über den Anfahrumrichter und den Generator 11 die zweite Welle 29 und damit der Rotor der Niederdruckturbine 15 gedreht werden. Die Überholkupplung 16 ist im Eingriff und überträgt ein Drehmoment von der zweiten Welle 29 auf die erste Welle 28, sodass die erste Welle 28 und damit der Rotor der Hochdruckturbine 14 und des Verdichters 13, mitgedreht wird.

Im Lastbetrieb der Gasturbine 10 ist die Drehzahl der Hochdruckturbine 14 größer als die Drehzahl der Niederdruckturbine 15. Die erste Welle 28 dreht sich also schneller als die zweite Welle 29. Die Überhohlkupplung 16 läuft dann frei und überträgt kein Drehmoment.

Ist die Gasturbine 10 mit der hydraulischen Kupplung 30 versehen, so ist die hydraulische Kupplung 30 bevorzugt regelbar. Eine Rate, welcher Anteil vom Drehmoment übertragen wird, ist dadurch einstellbar. Die Regelung kann insbesondere von einer Leittechnik 18 der Gasturbine 10 übernommen werden.

Die Gasturbine 10 mit hydraulischer Kupplung 30 ist aufgrund der variabel einstellbaren Drehmomentübertragungsrate ebenfalls dazu geeignet, den an den Anfahrumrichter angeschlossenen Generator 11 zum Anfahren des Generators oder zum Kesselspülen zu verwenden. Beim Anfahren wird ein möglichst großes Drehmoment von der zweiten Welle 29 auf die erste Welle 28 übertragen. Die hydraulische Kupplung 30 ist so ausgelegt, dass trotz eines auftretenden Schlupfs ein ausreichend hohes Drehmoment von der zweiten Welle 29 an die erste Welle 28 übertragen wird. Der Niederdruckturbinenrotor überträgt somit ein Drehmoment auf den Gasgeneratorrotor. Nach dem Start kann die hydraulische Kupplung 30 die drehmomentübertragende Verbindung zwischen der ersten Welle 28 und der zweiten Welle 29 wieder trennen.

Neben der Eignung, den Generator 11 zum Anfahren der Gasturbine 10 zu verwenden, ist die Gasturbine mit der hydraulischen Kupplung auch geeignet, die Gasturbine in einem größeren Bereich CO-konform (Kohlenstoffmonoxid-konform) zu betreiben, als es mit herkömmlichen zweiwelligen Gasturbinen möglich ist. Während eines Teillastbetriebs wird dem Gasgenerator an der ersten Welle 28 mittels der hydraulischen Kupplung 30 Leistung entzogen und an den Generator 11 weitergegeben. Dadurch verliert der Gasgenerator an Drehzahl und es wird weniger Luft angesaugt und verdichtet. Ein Luftüberschuss in der Brennkammer 36 kann damit reduziert und eine Flammtemperatur angehoben werden. Dadurch sinken die CO-Emissionen. Unter Umständen kann es notwendig sein zusätzlich die Brennstoffzufuhr zu drosseln, um die Leistung des Generators nicht ansteigen zu lassen. Eine Regelung zum COkonformen Betrieb der Gasturbine 10 könnte beispielsweise in der Weise erfolgen, dass die über die hydraulische Kupplung 30 zu übertragende Leistung ($P_{Kupplung}$) direkt als Sollwert als Funktion einer Gasturbinenleistung ($P_{Gasturbine}$) und einer Umgebungstemperatur ($T_{Umgebung}$) vorgegeben wird.

$$P_{Kupplung} = f(T_{Umgebung}, P_{Gasturbine})$$

Zur Ermittlung der Leistung können Wellen-Messsignale 19 von der Leittechnik 18 der Gasturbine ausgewertet werden. Die Wellen-Messsignale 19 sind insbesondere das Drehmoment und die Drehzahl. Daraus lässt sich die Leistung bestimmen.

Die hydraulische Kupplung 30 kann in der Weise ausgestaltet sein, dass sie zwei Kupplungsrotoren 31, 32 aufweist, wobei ein erster Kupplungsrotor 31 drehmomentübertragend mit der ersten Welle 28 verbunden ist und ein zweiter Kupplungsrotor 32 drehmomentübertragend mit der zweiten Welle 29 verbunden ist. Die hydraulische Kupplung 30 ist dabei in der Weise geschlossen ausgeformt, eine Kupplungsflüssigkeit 33 zumindest zeitweise zu halten. Insbesondere ist die hydraulische Kupplung 30 ausgebildet, die Kupplungsflüssigkeit 33 auch aufzunehmen und abzugeben. Ein Füllstand 34 der Kupplungsflüssigkeit 33 ist dadurch veränderbar. Die Kupplungsflüssigkeit 33 ist insbesondere ein Hydrauliköl.

Die Kupplungsrotoren 31, 32 weisen bevorzugt nicht näher gezeigte Schaufelelemente auf, mit denen die Kupplungsflüssigkeit 33 in der Weise beeinflusst wird, dass zwischen dem ersten Kupplungsrotor 31 und dem zweiten Kupplungsrotor 32 ein Kraftschluss durch Flüssigkeitsreibung erzeugbar ist, insbesondere dann, wenn der erste Kupplungsrotor 31 und der zweite Kupplungsrotor 32 unterschiedliche Drehzahlen aufweisen. Die Drehmomentübertragungsrate ist dabei von dem Füllstand 34 abhängig. Ist der Füllstand 34 gleich Null, ist kein Drehmoment übertragbar. Bei maximalem Füllstand 34 ist die maximale Drehmomentübertragungsrate erreicht.

Zur Änderung des Füllstands 34 kann die Gasturbine 10 eine Füllstandeinstelleinheit 35 aufweisen. Die Füllstandeinstelleinheit 35 ist mit der hydraulischen Kupplung 30 fluidleitend verbunden. In der in der Figur 3 gezeigten Ausgestaltung umfasst die Füllstandeinstelleinheit 35 ein Reservoir 22 zur Bereithaltung der Kupplungsflüssigkeit 33, in einer Zulaufleitung angeordnet eine Zulaufpumpe 27 und ein Zulaufventil 25 zum Befüllen der hydraulischen Kupplung 30 beziehungsweise zur Erhöhung des Füllstands 34, in einer Rücklaufleitung angeordnet eine Rücklaufpumpe 24 und ein Rücklaufventil 26 zum Senken des Füllstands 34. Gesteuert wird der Zulauf und Rücklauf mittels der Leittechnik 18, die ausgebildet ist, über Steuersignale 23 mit den Pumpen 24, 27 und Ventilen 25, 26 zu kommunizieren. Zudem erhält die Leittechnik 18 Kupplungsmesssignale 21, die über den aktuellen Zustand der hydraulischen Kupplung 30 informieren, insbesondere über den Füllstand 34 und eine Temperatur der hydraulischen Kupplung 30.

Damit die Temperatur der hydraulischen Kupplung 30 einen vorgegebenen Wert nicht übersteigt, kann die Füllstandeinstelleinheit 35 ein Kühlsystem 20 aufweisen. Das Kühlsystem 20 ist ausgebildet, der Kupplungsflüssigkeit 33 Wärme zu entziehen. Beispielsweise kann dazu ein Wärmetauscher im Reservoir 22 vorgesehen sein. Auch das Kühlsystem 20 kann von der Leittechnik 18 der Gasturbine 10 gesteuert beziehungsweise geregelt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gasturbine (10) mit einem Verdichter (13), einer Hochdruckturbine (14), einer Niederdruckturbine (15), einer in dem Verdichter (13) und der Hochdruckturbine (14) angeordneten ersten Welle (28) sowie einer in der Niederdruckturbine (15) angeordneten zweiten Welle (29), **dadurch gekennzeichnet, dass** die Gasturbine eine Kupplung (16, 30) umfasst und mit der Kupplung (16, 30) die erste Welle (28) und die zweite Welle (29) miteinander zumindest in eine Drehrichtung drehmomentübertragend verbindbar sind.

2. Gasturbine (10) nach Anspruch 1, wobei die Kupplung (30) eine hydraulische Kupplung (30) ist.

3. Gasturbine (10) nach Anspruch 2, wobei die hydraulische Kupplung (30) regelbar ist.

4. Gasturbine (10) nach Anspruch 3, wobei die hydraulische Kupplung (30) einen mit der ersten Welle (28) drehmomentübertragend verbundenen ersten Kupplungsrotor (31) und einen mit der zweiten Welle (29) drehmomentübertragend verbundenen zweiten Kupplungsrotor (32) umfasst, wobei die Kupplungsrotoren (31, 32) mit Schaufelelementen versehen sind, die ausgebildet sind, eine in der Kupplung (30) befindliche Kupplungsflüssigkeit (33) in der Weise zu beeinflussen, dass zwischen dem ersten Kupplungsrotor (31) und dem zweiten Kupplungsrotor (32) ein Kraftschluss durch Flüssigkeitsreibung erzeugbar ist.

5. Gasturbine (10) nach Anspruch 4, wobei ein Füllstand (34) der Kupplungsflüssigkeit (33) variabel einstellbar ist.

6. Gasturbine nach Anspruch 5, wobei die Gasturbine (10) eine mit der hydraulischen Kupplung (30) fluidleitend verbundene Füllstandeinstelleinheit (35) mit zumindest einem Reservoir (22) zur Aufbewahrung der Kupplungsflüssigkeit (33) und zumindest einer Pumpe (24) zur Beförderung der Kupplungsflüssigkeit (33) aus der hydraulischen Kupplung (30) ins Reservoir (22) und/oder aus dem Reservoir (22) in die hydraulische Kupplung (30) umfasst.

7. Gasturbine (10) nach Anspruch 6, wobei die Füllstandeinstelleinheit (35) ein Kühlsystem (20) umfasst, welches ausgebildet ist, der Kupplungsflüssigkeit (33) Wärme zu entziehen.

8. Gasturbine (10) nach Anspruch 1, wobei die Kupplung (16) eine Überholkupplung (16) ist.

9. Gasturbine (10) nach Anspruch 8, wobei die Überholkupplung (16) in der Weise angeordnet ist, dass die erste Welle (28) schneller als die zweite Welle (29) drehbar ist und die zweite Welle (29) nicht schneller als die erste Welle (28) drehbar ist.

FIG 1

FIG 2

FIG 3

EP 2 894 315 A1

Europäisches
Patentamt

European
Patent Office

Office européen
des brevets

**EUROPÄISCHER RECHERCHENBERICHT**

Nummer der Anmeldung

EP 14 15 1119

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | DE 26 55 868 A1 (MTU MUENCHEN GMBH [DE]) 15. Juni 1978 (1978-06-15) * Seite 14 - Seite 16; Abbildung 2 * ----- | 1-7 | INV. F02C3/10 F02C3/113 F02C6/20 F02C7/36 |
| X | US 2 591 540 A (HARRY GRYLLS SHADWELL) 1. April 1952 (1952-04-01) * Spalte 2, Zeile 48 - Spalte 3, Zeile 74; Abbildung 1 * ----- | 1,8,9 | |
| X | US 3 762 161 A (PENNIG G) 2. Oktober 1973 (1973-10-02) * Spalte 2, Zeile 18 - Spalte 3, Zeile 19; Abbildung 1 * ----- | 1-3 | |
| X | DE 22 25 833 A1 (WALLACE FRANK JULIUS) 6. Dezember 1973 (1973-12-06) * Seite 5 - Seite 7; Abbildung 1 * ----- | 1,8,9 | |
| X | US 3 587 766 A (SLADE PETER M) 28. Juni 1971 (1971-06-28) * Spalte 2, Zeile 12 - Spalte 3, Zeile 17; Abbildung 1 * ----- | 1,8,9 | RECHERCHIERTE SACHGEBIETE (IPC) |
| X | DE 24 39 255 A1 (MASCHF AUGSBURG NUERNBERG AG) 26. Februar 1976 (1976-02-26) * Seite 3 - Seite 4; Abbildung 1 * ----- | 1,2 | F02C |
| X | EP 0 104 921 A2 (GARRETT CORP [US]) 4. April 1984 (1984-04-04) * Seite 8, Zeile 21 - Seite 10, Zeile 22 * * Seite 13, Zeile 29 - Seite 16, Zeile 24; Abbildung 12 * ----- | 1 | |
| X | DE 10 2006 015928 A1 (MTU AERO ENGINES GMBH [DE]) 11. Oktober 2007 (2007-10-11) * Absatz [0010] * | 1 | |
| A | * Absatz [0017]; Abbildung 1 * ----- | 2-9 | |

Der vorliegende Recherchenbericht wurde für alle Patentansprüche erstellt

| Recherchenort | Abschlußdatum der Recherche | Prüfer |
|---|---|---|
| Den Haag | 7. Juli 2014 | Robelin, Bruno |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 14 15 1119

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2014

| Im Recherchenbericht angeführtes Patentdokument | Datum der Veröffentlichung | Mitglied(er) der Patentfamilie | Datum der Veröffentlichung |
|---|---|---|---|
| DE 2655868 A1 | 15-06-1978 | KEINE | |
| US 2591540 A | 01-04-1952 | KEINE | |
| US 3762161 A | 02-10-1973 | DE 2006138 A1<br>FR 2078472 A5<br>GB 1299813 A<br>US 3762161 A | 19-08-1971<br>05-11-1971<br>13-12-1972<br>02-10-1973 |
| DE 2225833 A1 | 06-12-1973 | KEINE | |
| US 3587766 A | 28-06-1971 | KEINE | |
| DE 2439255 A1 | 26-02-1976 | KEINE | |
| EP 0104921 A2 | 04-04-1984 | KEINE | |
| DE 102006015928 A1 | 11-10-2007 | KEINE | |

EPO FORM P0461

Für nähere Einzelheiten zu diesem Anhang : siehe Amtsblatt des Europäischen Patentamts, Nr.12/82